# EUROPEAN PATENT APPLICATION

(11) **EP 4 169 892 A1**
(43) Date of publication of application: **26.04.2023**
(21) Application number: 21826336.6
(22) Date of filing: 18.06.2021
(51) Int. Cl.: C05F 5/00, A23K 10/26, A23K 10/37, C05F 17/00

(54) **POWDER AND METHOD FOR MANUFACTURING POWDER**

(30) Priority: 19.06.2020 JP 2020106283
(71) Applicant: Glencal Technology Co., Ltd., Tokyo 144-0051 (JP)
(72) Inventor: NAKAISHI Masahito, Tokyo 144-0051 (JP)
(74) Representative: Strehl Schübel-Hopf & Partner
(86) International application number: PCT/JP2021/023265
(87) International publication number: WO 2021/256567

(57) **Abstract**

Provided are a powder body that can be widely used in various applications and a method for manufacturing the powder body. The powder body according to the present embodiment is obtained from a water-containing organic matter, and has a moisture content of 20% or less, a bacterial count of mesophilic aerobic bacteria of 10⁵/g or less, and a maximum exothermic peak by a differential thermal analysis method of 300°C or higher. The powder body has a temperature of a maximum exothermic peak detected by the differential thermal analysis method higher than that of powder bodies of the related art, and therefore has wider applications than powder bodies of the related art and can be widely used in various applications. The powder body can be used in applications including a fertilizer and feed, and in addition, a raw material for a molded article to be molded at a high temperature.

## Description

### Technical Field

The present invention relates to a powder body and a method for manufacturing a powder body.

### Background Art

In the related art, water-containing organic matters such as food waste have been processed through a decomposition using aerobic bacteria. General food waste processing apparatus employs a method of storing culture base material such as sawdust, rice husks, and so forth in a processing tank equipped with blades and a ventilation system and stirring the food waste crushed by a crusher together in the tank.

It has also been proposed that ozone is used for sterilizing and decomposing bacteria and molecules as an origin of bad odor that are to be exhausted into the atmosphere and converting such bacteria and molecules into harmless molecules before releasing to an atmosphere (for example, see PTL 1). Instead of simply discarding the powder bodies obtained from water-containing organic matters in such a way, effective use of the powder bodies has been considered for various applications such as fertilizers, feed, and raw materials of molded articles (molding materials).

### Citation List

### Patent Literature

PTL 1: JP-A-7-136629
PTL 2: JP-A-2010-136683

### Summary of the Invention

### Technical Problem

However, in PTL 1, if the culture base material does not work properly, the water-containing organic matter decays without being processed, so that the obtained powder body may be not used for various applications. Furthermore, general powder bodies obtained from water-containing organic matters have low heat resistance, and starts to carbonize at about 180°C to 260°C (see PTL 2, [0007]). Therefore, such a general powder body is difficult to use as a raw material of molded articles that is to be heated at a high temperature of 180°C to higher than 260°C, for example, a material of molded articles manufactured by molding such as injection molding or extrusion molding. Therefore, development of a new powder body that has, for example, high heat resistance and can be widely used for various applications has been awaited.

The present invention has been made in view of the above points, and an object of the present invention is to provide a powder body that can be widely used for various applications and a method for manufacturing the powder body.

### Solution to Problem

The powder body according to the present invention is a powder body obtained from a water-containing organic matter and having a moisture content of 20% or less, a bacterial count of mesophilic aerobic bacteria of 10⁵/g or less, and a maximum exothermic peak by a differential thermal analysis method of 300°C or higher.

The method for manufacturing a powder body, according to the present invention, is a method for manufacturing a powder body from a water-containing organic matter, and the method includes a storing step of storing the water-containing organic matter in a processing tank, and a processing step of heating the water-containing organic matter in the processing tank while the water-containing organic matter is stirred, supplying an ion gas having an ion density of 2,000,000 pcs/cc or higher to the processing tank at a rate ranging from 1 m³/min to 300 m³/min by exhausting a gas from the processing tank at a rate ranging from 1 m³/min to 300 m³/min to separate water molecules in the water-containing organic matter and evaporate water contained in the water-containing organic matter.

### Advantageous Effects of the Invention

According to the present invention, the powder body has a temperature of a maximum exothermic peak detected by the differential thermal analysis method higher than that of powder bodies of the related art, and therefore has wider applications than powder bodies of the related art and can be widely used in various applications.

### Brief Description of Drawings

[Fig. 1] A cross-sectional view illustrating a sectional configuration of a processing apparatus used for manufacturing a powder body according to an embodiment when the processing apparatus is viewed from a side.
[Fig. 2] A cross-sectional view illustrating a sectional configuration of the processing apparatus illustrated in Fig. 1 when the processing apparatus is viewed from an end.
[Fig. 3] A graph showing measurement results of thermogravimetric analysis, differential thermogravimetric analysis, and differential thermal analysis of a powder body obtained from apple lees.
[Fig. 4] A graph showing measurement results of thermogravimetric analysis, differential thermogravimetric analysis, and differential thermal analysis of a powder body obtained from carrot lees.
[Fig. 5] A graph showing measurement results of thermogravimetric analysis, differential thermogravimetric analysis, and differential thermal analysis of a powder body obtained from coffee grounds.

### Description of Embodiments

Referring to the drawings, an embodiment of the present invention will be described below in detail.

### (1) <Powder Body According to Present Embodiment>

The powder body according to the present embodiment is manufactured by heating a water-containing organic matter in a processing tank while the water-containing organic matter is stirred, and at the same time, exhausting a gas from the processing tank at a rate ranging from 1 m³/min to 300 m³/min, and supplying an ion gas having an ion density of 2,000,000 pcs/cc or higher to the processing tank.

Examples of the water-containing organic matter that serves as a raw material of the powder body include vegetable waste, fruit waste, cut grass, organic residues after beverage extraction, meat waste, waste of fish such as salmon, sewage, and waste foods. Examples of the organic residues after beverage extraction include apple lees, tangerine lees, grape lees, grapefruit lees, peach lees, carrot lees, green pepper lees, liquor lees, used green tea leaves, barley tea residues, and coffee grounds.

In manufacturing a powder body from these water-containing organic matters, the processing time may slightly depend on the kind of the water-containing organic matter, and therefore a plurality of kinds of water-containing organic matters are preferably processed separately without being mixed together to manufacture a powder body.

The powder body according to the present embodiment can be used as a fertilizer or feed, and in addition, can be used as a raw material of various molded articles (also referred to as a molding material) including, for example, various trays such as service trays, desk trays, pen trays, and coaster trays, containers such as containers and planters, parts of electronic equipment, parts of automobiles, blocks, and building materials.

The powder body manufactured by the above-described processing of the water-containing organic matter has a moisture content of 20% or less and a bacterial count of mesophilic aerobic bacteria of 10⁵/g or less. In addition to such a configuration, the powder body according to the present embodiment has a maximum exothermic peak detected at 300°C or higher by the differential thermal analysis method when heated from room temperature in the atmosphere, and therefore has high heat resistance and is less likely to carbonize even when heated at a high temperature.

The moisture content of the powder body according to the present embodiment can be measured with a loss on drying method. The loss on drying method includes measuring the weight of the water-containing organic matter before processing containing water, heating the water-containing organic matter to evaporate water, then measuring the weight of the water-containing organic matter with zero moisture, thereby assuming the reduced weight to be moisture to measure the moisture content.

The bacterial count of mesophilic aerobic bacteria can be measured, for example, with a standard agar plate culture method. In the present embodiment, the bacterial count of mesophilic aerobic bacteria is determined in accordance with the standard agar plate culture method performed by Japan Food Research Laboratories (https://www.jfrl.or.jp/storage/file/072.pdf).

The temperature at which the maximum exothermic peak appears in the differential thermal analysis method can be measured with a thermal analyzer (for example, a simultaneous thermogravimetric/differential thermal analyzer (product name "TG/DTA7220") manufactured by SII NanoTechnology Inc.). Specifically, while a sample (powder body) and a reference substance (alumina in this case) are heated from room temperature in the atmosphere, the temperature difference between the sample and the reference substance is measured to obtain a curve indicating the temperature difference between the sample and the reference substance (hereinafter, also referred to as a differential thermal analysis (DTA) curve), and the obtained curve is analyzed to specify the temperature at which the maximum exothermic peak appears.

The powder body according to the present embodiment preferably has a maximum exothermic peak detected at 300°C or higher, preferably 350°C or higher and 700°C or lower, and more preferably 450°C or higher and 600°C or lower with the differential thermal analysis method when heated from room temperature in the atmosphere.

In the present embodiment, the temperature at which the maximum exothermic peak appears in the differential thermal analysis method has been confirmed in the powder bodies obtained by processing, for example, apple lees, carrot lees, and coffee grounds respectively. As a result, it has been confirmed that all of the powder bodies have a maximum exothermic peak detected at 400°C or higher. This verification test will be described below.

In a powder body manufactured with a food waste processing apparatus of the related art that processes water-containing organic matters such as food waste by, for example, simply crushing and heating without supplying the above-described ion gas (hereinafter, simply referred to as a powder body of the related art), the temperature at which the maximum exothermic peak appears in the differential thermal analysis method is confirmed to be about 180°C to 260°C. That is, the powder body according to the present embodiment has a maximum exothermic peak that appears at a remarkably higher temperature than the maximum exothermic peak of powder bodies of the related art in the differential thermal analysis method, and thus the powder body has a physical property clearly different from that of powder bodies of the related art.

In the case of manufacturing a molded article by molding such as injection molding or extrusion molding, the raw material is generally to be heated at a high temperature of 180°C to higher than 260°C. Therefore, if a powder body of the related art, which has low heat resistance, is used as a raw material of a molded article, the powder body carbonizes by heating, so that such a powder body is difficult to use as a raw material of a molded article.

In contrast, the powder body according to the present embodiment has a maximum exothermic peak that appears in the differential thermal analysis method at a temperature of 300°C or higher, and thus has high heat resistance. Therefore, even if used as a raw material in the case of manufacturing a molded article by molding, the powder body is less likely to carbonize by heating, and thus can be used as a raw material of a molded article.

Furthermore, it has been confirmed that even if a powder body of the related art is set to have a moisture content of 20% or less immediately after manufacture, the moisture content increases with time and exceeds 20%. It has also been confirmed that a powder body of the related art having a moisture content of more than 20% has a bacterial count of mesophilic aerobic bacteria of 10⁸/g or more when measured with the standard agar plate culture method. As a result, powder bodies of the related art start to decay after a lapse of a predetermined time from manufacture, and the state immediately after the manufacture cannot be maintained for one year, so that the long-term preservation of powder bodies of the related art is difficult.

In contrast, the powder body according to the present embodiment has the above-described moisture content, bacterial count of mesophilic aerobic bacteria, and temperature at which the maximum exothermic peak is detected with the differential thermal analysis method, even when measured after being left at room temperature for one year after manufacture. For example, it has been confirmed that as a result of measuring the moisture content about one year after manufacture, the powder bodies according to the present embodiment obtained by processing coffee grounds and apple lees still have a moisture content of 20% or less and a bacterial count of mesophilic aerobic bacteria of 10⁵/g or less although the powder bodies have been left untouched at room temperature (20°C ± 15°C (5 to 35°C)) for about one year after manufacture. Furthermore, these powder bodies have a maximum exothermic peak detected at 300°C or higher with the differential thermal analysis method even about one year after manufacture.

Considering from such verification results, it can be inferred that the powder body according to the present embodiment can maintain the moisture content and the like for a long time as they are at the time of manufacture because in the powder body, unlike in powder bodies of the related art, many cell walls are not destroyed. It can also be inferred that the processing of supplying an ion gas having an ion density of 2,000,000 pcs/cc or higher to the processing tank at the time of manufacture causes various phenomena such as reduction in the size and the polarity of water clusters during the processing, reduction in the polymer size of the powder body, formation of the porous polymer surface, sterilization of the powder body, deodorization of the powder body, and adjustment of the magnitude of polarity of the powder body.

As a result, a powder body can be provided that can maintain its moisture content, bacterial count of mesophilic aerobic bacteria, and temperature at which the maximum exothermic peak is detected with the differential thermal analysis method for a long time as they are at the time of manufacture, has long-term preservability and high heat resistance, and serves as a fertilizer, feed, and a raw material of a molded article.

### (2) <Method for Manufacturing Powder Body According to Present Embodiment>

### (2-1) <Overall Configuration of Processing Apparatus Used for Manufacturing Powder Body According to Present Embodiment>

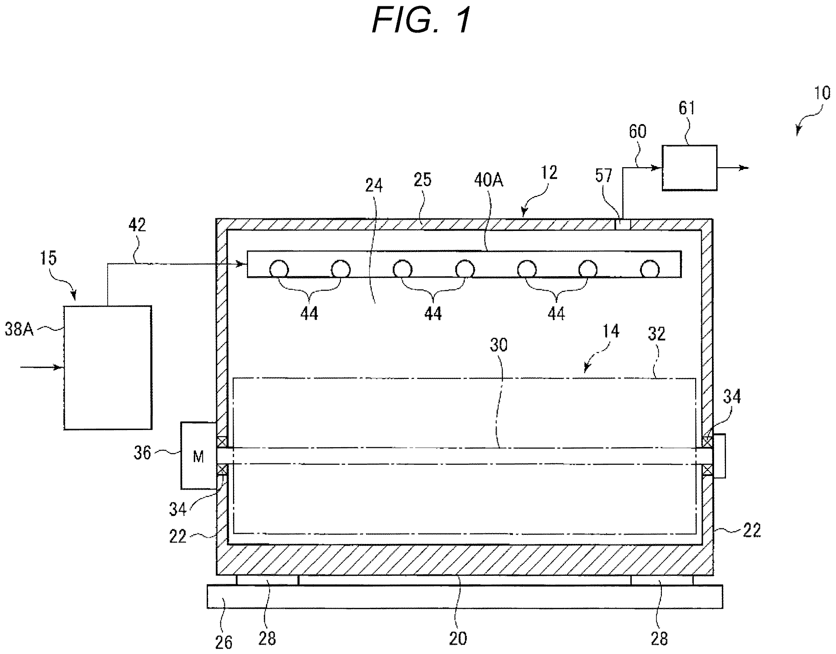

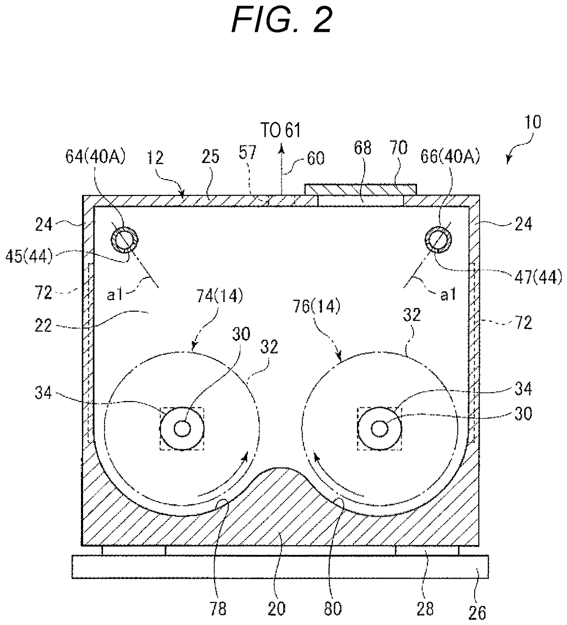

Next, an example of a processing apparatus used for manufacturing a powder body according to the present embodiment will be described. Fig. 1 is a cross-sectional view illustrating a sectional configuration of a processing apparatus 10 used for manufacturing the powder body according to the present embodiment when the processing apparatus 10 is viewed from a side 24, and Fig. 2 is a cross-sectional view illustrating a sectional configuration of the processing apparatus 10 viewed from an end 22.

As illustrated in Fig. 1 and Fig. 2, the processing apparatus 10 includes a processing tank 12, a stirring unit 14, an ion gas supply unit 15, an exhaust unit 61, and a heater 72, and is configured to process a water-containing organic matter stored in the processing tank 12. The processing tank 12 includes a bottom portion 20, a pair of ends 22 arranged opposite each other in a longitudinal direction (Fig. 1) and a pair of sides 24 arranged opposite each other in a short-side direction (Fig. 2), and an upper portion 25 to form a sealed space inside. The processing tank 12 may be formed, for example, of fiber-reinforced plastics (FRP), but not limited thereto. The bottom portion 20 of the processing tank 12 is provided with a base 26 via a load cell 28.

The processing tank 12 in the present embodiment is set to have the sealed space having a length of approximately 4.5 m in the longitudinal direction in which the pair of ends 22 oppose each other, a width of approximately 2.3 m in the short-side direction in which the pair of sides 24 oppose each other, and a height of approximately 1.6 m from the upper portion 25 to the lowest points of curved surfaces 78, 80 of the bottom portion 20.

The load cell 28 measures a load applied from the processing tank 12 installed on the load cell 28, and upon reception of a reset command from an operation panel (not illustrated), sets the measured value at the time of reception of the reset command as a reference value. Accordingly, the load cell 28 receives a reset command immediately after a water-containing organic matter is put in the processing tank 12, and then is able to set the weight of the water-containing organic matter before processing as a reference value and can measure a tendency of weight loss of the water-containing organic matter during the processing and the weight of the water-containing organic matter after completion of the processing (powder body) using the reference value.

The upper portion 25 includes an inlet opening 68 opening at a predetermined position in a thickness direction, and a lid 70 configured to open and close the inlet opening 68. The lid 70 is rotatably fixed to the upper portion 25 via a hinge at one end thereof to open and close the inlet opening 68. Accordingly, the water-containing organic matter is loaded into the processing tank 12 through the inlet opening 68 exposed with the lid 70 opened and is stored in the sealed processing tank 12 with the lid 70 closed.

As illustrated in Fig. 2, the sides 24 are respectively provided with the heaters 72, such as hot wire heaters or PTC heaters. The heaters 72 heat the interior of the processing tank 12 to shift the temperature in the processing tank 12 in a range from 25°C to 70°C. The temperature in the processing tank 12 is a value measured by a thermometer installed in the sealed space in the processing tank 12 in which the water-containing organic matter is stored.

In this manner, the phenomenon that the temperature in the processing tank 12 shifts within the range from 25°C to 70°C is caused by the change in temperature in the processing tank 12 according to the state of processing of the water-containing organic matter. However, an average temperature in the processing tank 12 when the temperature in the processing tank 12 falls within the range from 25°C to 70°C preferably falls within a range from 30°C to 50°C. The average temperature in the processing tank 12 is an average temperature obtained by measuring the temperature in the processing tank 12 by a plurality of times at predetermined intervals or at any timing when the temperature in the processing tank 12 falls within the range from 25°C to 70°C by being heated by the heater 72, and finally completing the processing of the water-containing organic matter.

When the water-containing organic matter is processed by a heating process with an average temperature in the processing tank 12 lower than 30°C, the water-containing organic matter can hardly be dried. Therefore, the average temperature in the processing tank 12 is preferably 30°C or higher. If the water-containing organic matter is processed by a heating process such that the average temperature in the processing tank 12 exceeds 50°C, the water-containing organic matter may be dried excessively, and thus the powder body tends to diffuse into the atmosphere in the form of dust at the time of completion of the processing. Therefore, the average temperature in the processing tank 12 is preferably 50°C or lower.

The stirring unit 14 provided in the processing tank 12 includes, as illustrated in Fig. 2, a first stirring unit 74 arranged on one side and a second stirring unit 76 arranged on the other side of the processing tank 12 in the short-side direction. The first stirring unit 74 and the second stirring unit 76 have the same configuration and each include, as illustrated in Fig. 1, a rotating shaft 30 disposed between the ends 22, and a blade 32 provided on the rotating shaft 30. The rotating shaft 30 is supported by bearings 34 provided respectively at the ends 22 in a rotatable manner with respect to the processing tank 12. One end of the rotating shaft 30 is connected to a drive unit 36.

In the case of the present embodiment, the first stirring unit 74 rotating counterclockwise and the second stirring unit 76 rotating clockwise stir the water-containing organic matter stored in the processing tank 12 to guide from the bottom portion 20 side of the processing tank 12 toward between the first stirring unit 74 and the second stirring unit 76.

The bottom portion 20 includes arcuate curved surfaces 78, 80 along the first stirring unit 74 and the second stirring unit 76. The curved surfaces 78, 80 are formed along trajectories of circular rotations of the respective blades 32 of the first stirring unit 74 and the second stirring unit 76 that rotate about the rotating shaft 30.

In addition to the above configuration, the upper portion 25 of the processing tank 12 in the present embodiment is provided at a predetermined position with an exhaust port 57 penetrating therethrough in the thickness direction. The exhaust unit 61 is connected to the exhaust port 57 via a flow channel 60. The exhaust unit 61 is, for example, a blower and is configured to suck a gas in the processing tank 12 and exhausts the gas in the processing tank 12 to outside during the processing of the water-containing organic matter in the processing tank 12.

In the present embodiment, the exhaust unit 61 preferably exhausts the gas from the processing tank 12 at a rate ranging from 1 m³/min to 300 m³/min, more preferably from 50 m³/min to 300 m³/min. The amount of gas exhausted from the processing tank 12 corresponds to the amount of gas exhausted from the exhaust unit 61, which exhausts the gas in the processing tank 12 to the atmosphere, and may be adjusted to a desired amount of exhaustion by adjusting a set value of the blower assuming that the blower is employed as the exhaust unit 61.

The processing tank 12 receives a supply of an ion gas (here, a negative-ion-containing gas (for example, negative-ion-containing air)) from the ion gas supply unit 15 described below by an amount corresponding to the amount of the gas exhausted from the processing tank 12. In this case, exhausting the gas from the processing tank 12 at a rate of 1 m³/min or higher may allow for maintenance of the amount of supply of the ion gas from the ion gas supply unit 15 described below to the processing tank 12 at an optimal value, and may also allow for appropriate circulation of the gas in the processing tank 12 to prevent the occurrence of condensation in the processing tank 12, resulting in acceleration of water vaporization of the water-containing organic matter. A rate of 50 m³/min or higher may allow for an increase in the amount of supply of the ion gas from the ion gas supply unit 15, and also may allow for an acceleration in the circulation of the gas in the processing tank 12 to ensure an effect of prevention of occurrence of condensation and the like.

Meanwhile, exhausting the gas from the processing tank 12 at a rate of 300 m³/min or lower allows for retention of the ion gas introduced from the ion gas supply unit 15 to the processing tank 12 in the processing tank 12, and prevention of the powder body from transforming to dust due to excessive evaporation of the moisture in the water-containing organic matter caused by circulating gas in the processing tank 12.

The ion gas supply unit 15 includes a negative ion generator 38A, an upper supply tube 40A including upper nozzles 44, and a flow channel 42 by which the negative ion generator 38A and the upper supply tube 40A communicate. The ion gas supply unit 15 makes the negative ion generator 38A generate negative ions, for example, by corona discharge or thermal ionization, supplies the ion gas containing the negative ions through the flow channel 42 to the upper supply tube 40A, and discharges the ion gas from the upper nozzles 44 of the upper supply tube 40A into the processing tank 12.

In the present embodiment, the negative ion generator 38A is configured to suck the atmosphere along with the exhaustion of gas from the processing tank 12 to generate negative ions in the gas passing through the negative ion generator 38A. The negative ion generator 38A ionizes gas molecules, for example, by detaching electrons from gas molecules such as oxygen and nitrogen contained in the atmosphere.

In the present embodiment, the amount of supply of the ion gas from the ion gas supply unit 15 to the processing tank 12 is adjusted by adjusting the amount of gas exhausted from the processing tank 12 by the exhaust unit 61. In this case, the ion gas supplied from the ion gas supply unit 15 to the processing tank 12 has an ion density of 2,000,000 pcs/cc or higher, preferably 20,000,000 pcs/cc or higher, and more preferably 60,000,000 pcs/cc or higher.

The phrase, for example, "supplying an ion gas having an ion density of 2,000,000 pcs/cc or higher at a rate ranging from 1 m³/min to 300 m³/min" means supplying 2,000,000 × 10⁶ = 2 × 10¹² pcs or more ions per minute. Ions supplied in this manner reliably diffuses into the water-containing organic matter to promote separation of water molecules from the water-containing organic matter, and thus water contained in the water-containing organic matter evaporates to reduce the amount of the water-containing organic matter.

Negative ions used for the food waste processing apparatus of the related art are used for deodorizing the interior of the food waste processing apparatus and are not used from the viewpoint of directly affecting and processing the water-containing organic matters such as the food waste. Therefore, an ion gas generated in the food waste processing apparatus has an ion density about the same as the ion density generated by an ion generator used in an air purifier, and the ion density generally has order of about 10⁶ pieces/cc (Reference Literature 1: JP-A-2011-206665, Reference Literature 2: JP-A-2008-175428).

The product specification of ITC-201A, the ion counter described in Reference Literature 1 and 2, describes that the sampling air flow rate is approximately 500 cc/sec (https://www.andes.co.jp/product/prd_ai/prd_ai_inti_itc-201a/). Therefore, the amount of ions is calculated to be 5 × 10⁸ pieces/sec from 10⁶ pieces/cc × 500 cc/sec, and when converted into the amount per minute, the amount of ions is determined to be 3 × 10⁹ pieces. This value is smaller than the numerical value in the present application, 2 × 10¹² pcs or more per minute, by about 3 orders.

Therefore, an ion gas used in the food waste processing apparatus of the related art is as thin as being diffused in odor (gas) in the food waste processing apparatus and is not considered to be sparse enough to diffuse the negative ions also into the food waste.

In contrast, in the present embodiment, the ion density in the processing tank 12 is 2,000,000 pcs/cc or higher, preferably higher than 20,000,000 pcs/cc, and more preferably 60,000,000 pcs/cc or higher to achieve the ion density in the processing tank 12 much higher than that in the food waste processing apparatus used for deodorization of the related art, so that diffusion of the negative ions in the ion gas into the water-containing organic matter is ensured, thereby promoting separation of water molecules from the water-containing organic matter.

The water molecules separated from the water-containing organic matter ascend in the processing tank 12, and during the ascending, the cluster structure in which a plurality (for example, five or six) of the water molecules are bound together breaks, and a part of the water molecules evaporates and is discharged to the outside by the exhaust unit 61.

In contrast, the remaining water molecules, that is, the water molecules having the cluster structure maintained, stay at a boundary between the water-containing organic matter being stirred and a space in the processing tank 12 filled with gas. However, the ion gas is blown to the boundary described above, and thus the negative ions in the ion gas decompose the cluster structure of the water molecules. The water molecules having subjected to the decomposition of the cluster structure are easily evaporated by the calorific power from the heater 72 and are discharged to the outside by the exhaust unit 61.

As described above, by increasing the ion density of the ion gas to a high density, the ion gas separates the water contained in the water-containing organic matter from the water-containing organic matter, and the ion gas decomposes the cluster structure of the water molecules. Therefore, the processing apparatus 10 may reduce the weight of the water-containing organic matter easily by the evaporation of the water contained therein.

An ion density of higher than 20,000,000 pcs/cc in the processing tank 12 make it much easier to diffuse the negative ions into the water-containing organic matter, and thus the water contained in the water-containing organic matter can be separated from the water-containing organic matter by the ion gas and decomposition of the cluster structure of the water molecules can be accelerated correspondingly. An ion density of 60,000,000 pcs/cc or higher in the processing tank 12 can further ensure the diffusion of the negative ions in the water-containing organic matter.

The upper supply tube 40A that communicates with the negative ion generator 38A includes the upper nozzles 44 each made, for example, of a circular opening at predetermined positions at predetermined intervals. The upper supply tube 40A is disposed parallel to the rotating shaft 30 and is provided at a position above the rotating shaft 30.

In the case of the present embodiment, the upper supply tube 40A is disposed at a position above the stored water-containing organic matter when the water-containing organic matter is stored in the processing tank 12 so as to be able to inject an ion gas from above the water-containing organic matter via the upper nozzles 44 without being buried in the stored water-containing organic matter when the water-containing organic matter is stored in the processing tank 12.

The upper supply tube 40A includes a first pipe 64 and a second pipe 66 disposed on both sides with the exhaust port 57, which is provided at a center of the processing tank 12 in the short-side direction, interposed therebetween. The first pipe 64 is disposed so as to extend along one side 24 (the side on the left in Fig. 2), and the second pipe 66 is disposed so as to extend along the other side 24 (the side on the right in Fig. 2).

The first pipe 64 includes a first upper nozzle 45 formed as one of the upper nozzles 44, and the second pipe 66 includes a second upper nozzle 47 formed as one of the upper nozzles 44. The first upper nozzle 45 and the second upper nozzle 47 preferably open in a range from a central orientation of the processing tank 12 in a horizontal direction to a downward orientation in a vertical direction.

In the present embodiment, a line a1 connecting between a center portion of the first pipe 64 and the first upper nozzle 45 and a line a1 connecting between a center portion of the second pipe 66 and the second upper nozzle 47 extend toward a portion between the first stirring unit 74 and the second stirring unit 76. Accordingly, the first pipe 64 and the second pipe 66 inject an ion gas toward a boundary between the water-containing organic matter introduced from the bottom portion 20 of the processing tank 12 toward between the first stirring unit 74 and the second stirring unit 76 and a space in the processing tank 12 filled with gas.

### (2-2) <Method for Manufacturing Powder Body Using Processing Apparatus>

Next, a method for manufacturing a powder body from a water-containing organic matter using the processing apparatus 10 will be described. In this case, a user loads a water-containing organic matter to be processed into the processing tank 12 and stores the water-containing organic matter in a sealed space in the processing tank 12 (storing step). The user then issues a process start command via an operating panel (not illustrated) of the processing apparatus 10 to drive the stirring unit 14, the exhaust unit 61, the heater 72, and the negative ion generator 38A and starts processing of the water-containing organic matter in the processing apparatus 10.

In this case, the processing apparatus 10 drives the stirring unit 14 and stirs the water-containing organic matter in the processing tank 12 when the process start command is issued (stirring). In this case, stirring of the water-containing organic matter by the stirring unit 14 is done to the extent that the water-containing organic matter can circulate in the entire processing tank 12.

The processing apparatus 10 drives the exhaust unit 61 when the process start command is issued, starts exhausting the gas from the processing tank 12 at a rate ranging from 1 m³/min to 300 m³/min (exhausting) and drives the negative ion generator 38A to generate negative ions in the gas.

The negative ion generator 38A sucks the atmosphere by an amount corresponding to the amount of the gas exhausted from the processing tank 12 by the exhaust unit 61 and ionizes gas molecules by detaching electrons from gas molecules such as oxygen and nitrogen contained in the atmosphere. At this time, the amount of exhaustion by the exhaust unit 61 is adjusted, and the ion gas having an ion density of 2,000,000 pcs/cc or higher, preferably higher than 20,000,000 pcs/cc, and more preferably 60,000,000 pcs/cc or higher is supplied from the ion gas supply unit 15 into the processing tank 12, so that the processing tank 12 is filled with the ion gas (supplying ion gas).

At this time, the processing apparatus 10 drives the heater 72, heats the interior of the processing tank 12, shifts the temperature in the interior of the processing tank 12 within the range from 25°C to 70°C, and adjusts an average temperature in the processing tank 12 at the time of completion of the processing within this temperature range to fall within a range from 30°C to 50°C (heating).

In this manner, the processing apparatus 10 performs stirring of the water-containing organic matter, heating the interior of the processing tank 12, exhaustion of gas from the interior of the processing tank 12, and supply of the ion gas having at least a predetermined value of ion density into the processing tank 12 continuously for a predetermined time (processing step).

Accordingly, the processing apparatus 10 stirs and heats the water-containing organic matter, circulates gas in the processing tank 12 by exhaustion, and supplies an ion gas into the processing tank 12, and by the synergistic effects of these operations, makes water molecules contained in the water-containing organic matter easily separate and decompose the water-containing organic matter, and decomposes the cluster structure of water molecules, thereby efficiently decomposing the water-containing organic matter. Accordingly, the water-containing organic matter processed by the processing apparatus 10 ultimately may become a powder body having a desired moisture content and a significantly reduced weight compared to the water-containing organic matter of the initial state.

Here, the time to terminate the processing of the water-containing organic matter is preferably determined according to the moisture content of the water-containing organic matter. More specifically, the processing of the water-containing organic matter is preferably terminated when the moisture content of the powder body ranges from 2% to 20%, more preferably from 10% to 20%. The moisture content is a value measured with the above-described loss on drying method.

When the moisture content of the powder body obtained by processing the water-containing organic matter is less than 2%, the powder body is excessively dry and becomes dust, and, for example, the powder body may be flown up into the atmosphere when the processing tank 12 is opened. Therefore, the moisture content of the powder body is preferably 2% or more. Setting the moisture content of the powder body to 20% or less can suppress the bacterial count of mesophilic aerobic bacteria to 10⁵/g or less, and thus the powder body can be used as a fertilizer, feed, or a raw material of a molded article. When the powder body is used as a fertilizer, feed, or a raw material of a molded article, the moisture content of the powder body is preferably within a range from 10% to 20% for ease of handling.

The processing time of such a water-containing organic matter depends on the amount of the loaded water-containing organic matter, the kind of the water-containing organic matter, the moisture state of the water-containing organic matter, the heating temperature in the processing tank 12, the amount of the supplied ion gas, the amount of the gas exhausted from the processing tank 12, and so forth. However, if the water-containing organic matter is general vegetable waste or an organic residue after beverage extraction having a moisture content ranging from 40% to 90% and a weight ranging approximately from 30 kg to 300 kg, a powder body having a moisture content of 20% or less can be obtained by, for example, processing the water-containing organic matter by setting the ion density to 60,000,000 pcs/cc or higher continuously for a time period ranging from 2 hours to 70 hours under the above-described processing conditions.

In general, in the processing tank having a low temperature of 50°C or lower, it is difficult to suppress the bacterial count of mesophilic aerobic bacteria in the water-containing organic matter to 10⁵/g or less. However, the processing apparatus 10 stirs the water-containing organic matter, circulates gas in the processing tank 12, and supplies an ion gas to the water-containing organic matter when processing the water-containing organic matter, so that even when the average temperature in the processing tank 12 is reduced to 50°C or lower, the bacterial count of mesophilic aerobic bacteria in the powder body can be reduced to 10⁵/g or less in a short time by the synergistic effects of these operations.

In addition to those described above, if the reduction of the total amount of the water-containing organic matter by processing the water-containing organic matter is intended, the processing time for the water-containing organic matter can be determined according to the results of weight measurement of the water-containing organic matter obtained by the load cell 28. The processing apparatus 10, under the above-described processing conditions, is capable of reducing the water-containing organic matter before processing in the processing tank 12 to a range from one-eighth to one-third by processing the water-containing organic matter continuously for a time period from 2 hours to 70 hours.

In this case, the processing apparatus 10 detects that the weight of the water-containing organic matter before processing in the processing tank 12 is reduced to a range from one-eighth to one-third by the load cell 28 and notifies users via sounds or lights, so that the completion of processing of the water-containing organic matter can be notified to the users.

### (3) <Operation and Effects>

In the above-described configuration, the powder body is obtained from a water-containing organic matter, and has a moisture content of 20% or less, a bacterial count of mesophilic aerobic bacteria of 10⁵/g or less, and a maximum exothermic peak detected at 300°C or higher with a differential thermal analysis method. The powder body has a maximum exothermic peak detected with the differential thermal analysis method at a higher temperature than the maximum exothermic peak of powder bodies of the related art, and therefore has wider applications than powder bodies of the related art and can be widely used in various applications. The powder body can be used in applications including a fertilizer and feed, and in addition, a raw material for a molded article to be molded at a high temperature.

In a method for manufacturing such a powder body, first, a water-containing organic matter stored in the processing tank 12 is stirred with the stirring unit 14, and the interior of the processing tank 12 is heated by the heater 72. At the same time, the processing apparatus 10 exhausts gas from the processing tank 12 by the exhaust unit 61 at a rate ranging from 1 m³/min to 300 m³/min, and along with the exhaustion, supplies an ion gas having an ion density of 2,000,000 pcs/cc or higher from the ion gas supply unit 15 to the processing tank 12 to process the water-containing organic matter (processing step).

As described above, in the processing apparatus 10, the powder body according to the present embodiment can be manufactured, without using a culture base material of the related art, by processing a water-containing organic matter with a method including stirring the water-containing organic matter, heating the interior of the processing tank 12, exhausting gas from the interior of the processing tank 12, and supplying an ion gas to the water-containing organic matter.

The processing apparatus 10 shifts the temperature in the processing tank 12 within the range from 25°C to 70°C by the heater 72 during the processing of the water-containing organic matter, sets the ion density to preferably 60,000,000 pcs/cc or higher, and performs the processing of the water-containing organic matter in the processing tank 12 preferably continuously for a time period ranging from 2 hours to 70 hours. Thus, the powder body according to the present embodiment can be manufactured from various water-containing organic matters having different moisture contents and the like.

The powder body according to the present embodiment obtained as described above has a moisture content of 20% or less and a high nutritional value, and therefore can be used as a fertilizer or feed. Furthermore, this powder body can maintain its state at the time of manufacture in which the moisture content is 20% or less, the bacterial count of mesophilic aerobic bacteria is 10⁵/g or less, and the temperature at which the maximum exothermic peak is detected with the differential thermal analysis method is 300°C or higher, even after being left at room temperature for 1 year from the manufacture. Therefore, a powder body having long-term preservability can be provided, and a fertilizer, feed, and a raw material of a molded article that are easy to handle can be attained.

Powder bodies of the related art manufactured for reusing water-containing organic matters have a maximum exothermic peak detected with the differential thermal analysis method at a temperature of lower than 300°C and have low heat resistance, and therefore are difficult to use for molding, such as injection molding and extrusion molding, that requires heating at a high temperature. However, the powder body according to the present embodiment can have a maximum exothermic peak detected with the differential thermal analysis method at a temperature of 300°C or higher, and therefore can be used for molding including heating at a high temperature.

### (4) <Other Embodiments>

The present invention is not limited to the embodiment described above and may be modified as needed within a scope of the gist of the present invention, and processing tanks having various sizes may be applied as the processing tank. In the embodiment described above, as an ion gas supply unit, the ion gas supply unit 15 is applied that is provided with the negative ion generator 38A and configured to supply an ion gas having a negative ion density of 2,000,000 pcs/cc or higher, preferably higher than 20,000,000 pcs/cc, and more preferably 60,000,000 pcs/cc or higher to the processing tank 12, but the present invention is not limited thereto. For example, an ion gas supply unit may be applied that is provided with a positive ion generator as an ion gas generator and configured to supply an ion gas having a positive ion density of 2,000,000 pcs/cc or higher, preferably higher than 20,000,000 pcs/cc, and more preferably 60,000,000 pcs/cc or higher to the processing tank 12.

As another ion gas supply unit, an ion gas supply unit may be applied that is provided with an ion generator capable of generating both positive ions and negative ions and is configured to supply an ion gas having a density of ions including positive ions and negative ions of 2,000,000 pcs/cc or higher, preferably higher than 20,000,000 pcs/cc, and more preferably 60,000,000 pcs/cc or higher to the processing tank 12.

In the embodiment described above, a case is described in which a blower is provided as the exhaust unit 61 to forcedly exhaust gas from the interior of the processing tank 12, but the present invention is not limited thereto. For example, such a configuration is also applicable in which a blower that serves as a suction unit is provided in the negative ion generator 38A on the suction side, a simple filter is employed as the exhaust unit, and gas in the processing tank 12 is exhausted from the exhaust unit by suction with the suction unit at a rate ranging from 1 m³/min to 300 m³/min.

### (5) <Verification Test>

### (5-1) <Moisture Content and Bacterial Count of Mesophilic Aerobic Bacteria of Powder Body According to Present Embodiment>

Next, as water-containing organic matters, apple lees, peach lees, carrot lees, green pepper lees, liquor lees, used green tea leaves, barley tea residues, and coffee grounds after beverage extraction were prepared. From each water-containing organic matter, a powder body was manufactured in accordance with the manufacturing method described above, and the moisture content and the bacterial count of mesophilic aerobic bacteria of each powder body were examined.

In this case, gas was exhausted from the processing tank 12 at 50 m³/min, the ion density of an ion gas to be supplied to the processing tank 12 was maintained at about 60,000,000 pcs/cc, and the temperature in the processing tank 12 during processing of the water-containing organic matter was shifted within a temperature range from 20°C to 70°C. Such processing was continuously performed for a predetermined time.

Specifically, 200 kg of apple lees having a moisture content of 78.9% after beverage extraction were prepared and continuously processed for 42 hours using the processing apparatus 10 under the above-described processing conditions with an ion density of about 60,000,000 pcs/cc. The moisture content and the weight of the obtained powder body were examined. As a result, it was confirmed that the moisture content was 3.2% and the weight was 45 kg. The obtained powder body was confirmed to have a weight reduced to about one-fifth of the weight before processing.

In addition, 40 kg of peach lees having a moisture content of 71.0% after beverage extraction were prepared and continuously processed for 18 hours using the processing apparatus 10 under the above-described processing conditions with an ion density of about 60,000,000 pcs/cc. The moisture content and the weight of the obtained powder body were examined. As a result, it was confirmed that the moisture content was 6.2% and the weight was 12 kg. The obtained powder body was confirmed to have a weight reduced to about one-fourth of the weight before processing.

In addition, 231 kg of carrot lees having a moisture content of 87.1% after beverage extraction were prepared and continuously processed for 48 hours using the processing apparatus 10 under the above-described processing conditions with an ion density of about 60,000,000 pcs/cc. The moisture content and the weight of the obtained powder body were examined. As a result, it was confirmed that the moisture content was 2.8% and the weight was 24 kg. The obtained powder body was confirmed to have a weight reduced to about one-tenth of the weight before processing.

In addition, 200 kg of green pepper lees having a moisture content of 84.4% after beverage extraction were prepared and continuously processed for 48 hours using the processing apparatus 10 under the above-described processing conditions with an ion density of about 60,000,000 pcs/cc. The moisture content and the weight of the obtained powder body were examined. As a result, it was confirmed that the moisture content was 12.1% and the weight was 68 kg. The obtained powder body was confirmed to have a weight reduced to about one-third of the weight before processing.

In addition, 189 kg of liquor lees (containing wheat bran) having a moisture content of 45.0% after beverage extraction were prepared and continuously processed for 48 hours using the processing apparatus 10 under the above-described processing conditions with an ion density of about 60,000,000 pcs/cc. The moisture content and the weight of the obtained powder body were examined. As a result, it was confirmed that the moisture content was 3.5% and the weight was 96 kg. The obtained powder body was confirmed to have a weight reduced to about half of the weight before processing.

In addition, 106 kg of used green tea leaves having a moisture content of 86.4% after beverage extraction were prepared and continuously processed for 24 hours using the processing apparatus 10 under the above-described processing conditions with an ion density of about 60,000,000 pcs/cc. The moisture content and the weight of the obtained powder body were examined. As a result, it was confirmed that the moisture content was 2.3% and the weight was 17 kg. The obtained powder body was confirmed to have a weight reduced to about one-sixth of the weight before processing.

In addition, 130 kg of barley tea residue having a moisture content of 80.2% after beverage extraction was prepared and continuously processed for 18 hours using the processing apparatus 10 under the above-described processing conditions with an ion density of about 60,000,000 pcs/cc. The moisture content and the weight of the obtained powder body were examined. As a result, it was confirmed that the moisture content was 20% or less and the weight was 69 kg. The obtained powder body was confirmed to have a weight reduced to about half of the weight before processing.

In addition, 303 kg of coffee grounds having a moisture content of 47.0% after beverage extraction were prepared and continuously processed for 68 hours using the processing apparatus 10 under the above-described processing conditions with an ion density of about 60,000,000 pcs/cc. The moisture content and the weight of the obtained powder body were examined. As a result, it was confirmed that the moisture content was 19.8% or less and the weight was 109 kg. The obtained powder body was confirmed to have a weight reduced to about one-third of the weight before processing.

### (5-2) <Verification Test on Re-Absorption of Moisture in Long-Term Preservation of Powder Body According to Present Embodiment>

Next, strained lees of apple juice (apple lees) remaining when apple juice was manufactured were processed using the processing apparatus 10 of the present embodiment to manufacture a powder body. Grounds of coffee (coffee grounds) were also processed using the processing apparatus 10 of the present embodiment to manufacture a powder body.

In this case, gas was exhausted from the processing tank 12 at 50 m³/min, the ion density of an ion gas to be supplied to the processing tank 12 was maintained at 60,000,000 pcs/cc or higher, and the temperature in the processing tank 12 during processing of the water-containing organic matter was shifted within a temperature range from 20°C to 70°C. Such processing was continuously performed for approximately 20 hours to manufacture powder bodies from apple lees and coffee grounds, respectively. The apple lees and the coffee grounds used in this verification test were different from the apple lees and the coffee grounds in the examples described for the above-described verification test.

The powder body manufactured by processing apple lees using the processing apparatus 10 (hereinafter referred to as apple-lees-processed powder body) and the powder body manufactured by processing coffee grounds using the processing apparatus 10 (hereinafter, referred to as coffee-grounds-processed powder body) were observed focusing on re-absorption of moisture in long-term preservation without specific measure such as tight seal.

Note that the powder bodies according to the present embodiment obtained by processing coffee grounds and apple lees were already left outdoors before this verification test at room temperature (20°C ± 15°C (5 to 35°C) for about 1 year after manufacture, and confirmed to have a moisture content of 20% or less, a bacterial count of mesophilic aerobic bacteria of 10⁵/g or less, and a maximum exothermic peak detected at 300°C or higher with the differential thermal analysis method, even after about 1 year from the manufacture. However, verification tests were not performed focusing on re-absorption of moisture at this time, and therefore this verification test was additionally performed.

In this verification test, flexible container bags (manufactured by Atsuta Shizai Co., Ltd., product name: AS-002F (one-way container bag)) with a capacity of 1,000 kg were prepared, which were formed from a sheet woven with strong chemical fibers such as polyethylene and polypropylene.

On June 20, 2019, at a factory in Hirosaki City, Aomori Prefecture, Japan, the above-described apple-lees-processed powder body was made, the apple-lees-processed powder body was put into the flexible container bags, and each of the flexible container bags was filled entirely with the apple-lees-processed powder body. Then, openings of the flexible container bags filled with the apple-lees-processed powder body were tied and sealed.

The flexible container bags filled with the apple-lees-processed powder body were simply laid out in a warehouse on the premises of the above-described factory (Hirosaki City, Aomori Prefecture, Japan) without stacking and left untouched. The warehouse where the flexible container bags were left had side walls made of concrete blocks and a roof made of tin, was not equipped with any particular insulation, and was protected against rain and wind.

The coffee-grounds-processed powder body was packed into flexible container bags in the same manner, and their openings were tied and sealed. The flexible container bags were left in the same warehouse where the flexible container bags filled with the apple-lees-processed powder body were left in the same manner.

The moisture contents of the apple-lees-processed powder body and the coffee-grounds-processed powder body were measured when they were packed in the flexible container bags to start the verification test. The moisture contents in this verification test are values measured with the above-described loss on drying method.

The verification test on the apple-lees-processed powder body was started on June 20, 2019, and the moisture content at the start of the verification test was 11.8%. Then, the flexible container bags filled with the apple-lees-processed powder body were continued to be left at room temperature in the warehouse in Hirosaki City, Aomori Prefecture, Japan as described above, and the moisture content was measured again for the apple-lees-processed powder body in the flexible container bags on January 7, 2020.

As the timing of the verification test, a period (June 2019 to July 2020) was selected when the system was exposed to environments in summer (30°C) and winter (-10°C) in order to check the effects of seasonal changes and temperature fluctuations and so on.

The moisture content of the apple-lees-processed powder body in the flexible container bags left in the warehouse from June 20, 2019, to January 7, 2020 was 12.2%. The bacteria count check and the like were conducted on the apple-lees-processed powder body during the verification test, and thus the flexible container bags were opened approximately every month. From the results of the verification test described above, it has been confirmed that the apple-lees-processed powder body manufactured by the processing apparatus 10 of the present embodiment can have a moisture content of 20% or less at the time of manufacture, and can maintain the moisture content at a level at the time of manufacture of 20% or less for a long period of time (about 6 months). It has been confirmed again on June 2020 that the apple-lees-processed powder body can maintain the moisture content at a level at the time of manufacture of 20% or less for a long period of time.

The verification test on the coffee-grounds-processed powder body was started on July 6, 2019 and the moisture content at the start of the verification test was 9.4%. Then, the flexible container bags filled with the coffee-grounds-processed powder body were continued to be left at room temperature in the warehouse in Hirosaki City, Aomori Prefecture, Japan as described above, and the moisture content was measured again also for the coffee-grounds-processed powder body in the flexible container bags on January 7, 2020.

The moisture content of the coffee-grounds-processed powder body in the flexible container bags left in the warehouse from July 6, 2019 to January 7, 2020 was 9.4%. From this result, it has been confirmed that the coffee-grounds-processed powder body having a moisture content set to 20% or less at the time of manufacture can maintain the moisture content at a level at the time of manufacture of 20% or less for a long period of time (about 6 months). It has been confirmed again on June 2020 that the coffee-grounds-processed powder body can maintain the moisture content at a level at the time of manufacture of 20% or less for a long period of time.

It has also been confirmed that the apple-lees-processed powder body and the coffee-grounds-processed powder body have a bacterial count of mesophilic aerobic bacteria of 10⁵/g or less when measured with the standard agar plate culture method. In this verification test, the results of measuring the powder bodies preserved for about 6 months show no rapid change in the transitions of the moisture content and the like, and it has been found again that the powder bodies can be preserved for a period as long as one year.

In a powder body of the related art manufactured by a food waste processing apparatus of the related art that processes water-containing organic matters such as food waste by crushing and heating, it has been confirmed that the moisture content set to 20% or less immediately after manufacture increases with time and exceeds 20% generally after about 3 to 4 months. It has also been confirmed that as a result, the powder body of the related art has a bacterial count of mesophilic aerobic bacteria of 10⁸/g or more and starts to decay, and that the long-term preservation of the powder body of the related art is difficult.

In this verification test, the powder bodies manufactured from apple lees and coffee grounds respectively were preserved for a long period of time to perform a verification test on re-absorption of moisture. From the verification results of the powder bodies obtained from apple lees and coffee grounds, it can be inferred that in addition to the above-described lees, peach lees, carrot lees, green pepper lees, liquor lees, used green tea leaves, and barley tea residues can be similarly used to maintain the moisture content of the powder body at a level at the time of manufacture of 20% or less for a period of time.

That is, the powder body according to the present embodiment is obtained by processing including heating a water-containing organic matter in the processing tank 12 while the water-containing organic matter is stirred, exhausting a gas from the processing tank 12 at a rate ranging from 1 m³/min to 300 m³/min, and supplying an ion gas having an ion density of 2,000,000 pcs/cc or higher to the processing tank 12 at a rate ranging from 1 m³/min to 300 m³/min to separate water molecules in the water-containing organic matter and evaporate water contained in the water-containing organic matter, and it can be said that as a result of such processing, the powder body can maintain the moisture content at 20% or less for a long time with many cell walls undestroyed in the powder body unlike powder bodies of the related art.

Therefore, as a result of the above-described processing, the resulting powder bodies manufactured from peach lees, carrot lees, green pepper lees, liquor lees, used green tea leaves, and barley tea residues respectively also can have a moisture content of 20% or less with many cell walls undestroyed in the powder bodies similarly to the powder bodies manufactured from apple lees and coffee grounds, and therefore it can be inferred that the moisture content can be maintained as it is for a long time.

### (5-3) <Verification Test on Thermogravimetric Analysis, Differential Thermogravimetric Analysis, and Differential Thermal Analysis of Powder Body According to Present Embodiment>

Next, strained lees of apple juice (apple lees) remaining when apple juice was manufactured, strained lees of carrot juice (carrot lees) remaining when carrot juice was manufactured, and grounds of coffee (coffee grounds) were each processed using the processing apparatus 10 of the present embodiment to manufacture powder bodies.

The processing conditions were the same as those in the above-described verification test as follows. Gas was exhausted from the processing tank 12 at 50 m³/min, the ion density of an ion gas to be supplied to the processing tank 12 was maintained at 60,000,000 pcs/cc or higher, and the temperature in the processing tank 12 during processing of the water-containing organic matter was shifted within a temperature range from 20°C to 70°C. Such processing was continuously performed for approximately 20 hours. Thus, powder bodies were manufactured from the apple lees, the carrot lees, and the coffee grounds, respectively. The apple lees, the carrot lees, and the coffee grounds used in this verification test were different from the apple lees, the carrot lees, and the coffee grounds in the examples described for the above-described verification test.

Each of the obtained powder bodies was subjected to thermogravimetric analysis in which the powder body was heated to examine its weight loss, differential thermogravimetric analysis in which the result of the thermogravimetry was differentiated, and differential thermal analysis in which the endotherm or exotherm of the powder body during heating was examined.

In the thermogravimetric analysis, the differential thermogravimetric analysis, and the differential thermal analysis, the powder body was measured using a simultaneous thermogravimetric/differential thermal analyzer (product name "TG/DTA7220") manufactured by SII NanoTechnology Inc.

In this case, the powder body as a sample and alumina as a reference substance were placed in a simultaneous thermogravimetric/differential thermal analyzer, and the sample (powder body) and the reference substance (alumina) were heated in the atmosphere from 30°C to 500°C. The sample at this time was measured with the simultaneous thermogravimetric/differential thermal analyzer to obtain a thermo gravimetry (TG) curve, a differential thermogravimetry (DTG) curve, and a differential thermal analysis (DTA) curve of the sample.

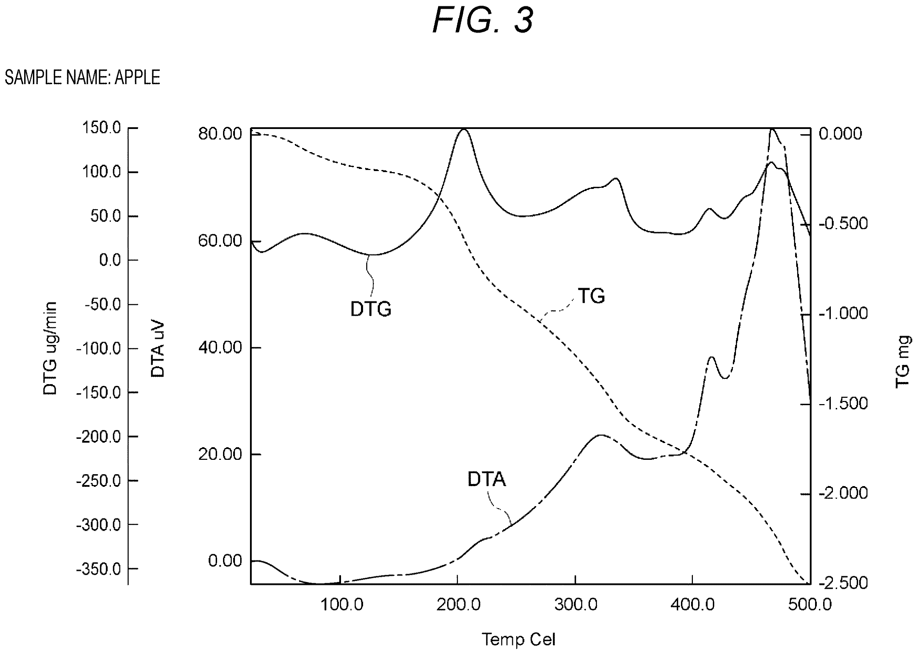

As a result of measuring the powder body manufactured from the apple lees, the results shown in Fig. 3 (denoted by "SAMPLE NAME: APPLE") were obtained. Fig. 3 shows the measurement results of the thermogravimetric analysis, the differential thermogravimetric analysis, and the differential thermal analysis of the powder body manufactured from the apple lees.

In Fig. 3, the TG curve (denoted by "TG" in the drawing), which is the measurement result of the thermogravimetric analysis, shows the temperature [°C] indicated by the horizontal axis and the weight (mass) change [mg] indicated by the vertical axis. The DTG curve, which is the measurement result of the differential thermogravimetric analysis, shows the temperature [°C] indicated by the horizontal axis and the weight (mass) change rate [pg/min] indicated by the vertical axis. The DTA curve, which is the measurement result of the differential thermal analysis, shows the temperature [°C] indicated by the horizontal axis and the output [uV] of the electromotive force of the thermocouple as a heat flow indicated by the vertical axis.

From the TG curve in Fig. 3, weight loss (a weight loss of approximately 0.25 mg (approximately 10%)) mainly due to the water contained in the sample occurred from the test start temperature, 30°C, to 200°C. Then, weight loss further occurred in the vicinity of 350°C, and the sample burned toward 500°C.

The DTG curve in Fig. 3 (denoted by "DTG" in the drawing) has a peak within a temperature range from 70°C to 80°C, and in addition, has peaks in the vicinity of 220°C and in the vicinity of 350°C. These peaks are considered to be associated with the weight loss.

The DTA curve in Fig. 3 (denoted by "DTA" in the drawing) has been confirmed to have an endothermic peak due to heat of vaporization accompanying volatilization of water up to 100°C. The DTA curve also has an exothermic peak in the vicinity of 310°C. It is inferred that this peak shows exotherm accompanying generation of a pyrolysis gas due to heating. The steep peak from in the vicinity of 430°C is considered to be due to burning of the sample that is to carbonize. It can be inferred that the maximum exothermic peak appears and the sample carbonizes in the vicinity of about 500°C.

From the above, it has been confirmed that the powder body manufactured from the apple lees has a maximum exothermic peak detected with the differential thermal analysis method at at least 400°C or higher, and has high heat resistance.

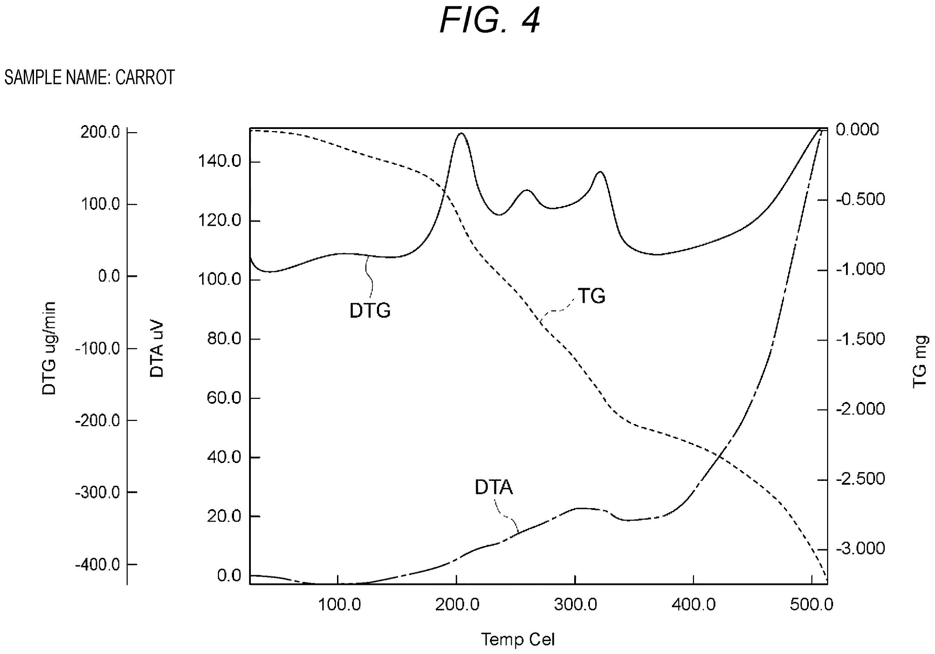

As a result of measuring the powder body manufactured from the carrot lees, the results shown in Fig. 4 (denoted by "SAMPLE NAME: CARROT") were obtained. Fig. 4 shows the measurement results of the thermogravimetric analysis, the differential thermogravimetric analysis, and the differential thermal analysis (the TG curve, the DTG curve, and the DTA curve) of the powder body manufactured from the carrot lees.

From the TG curve in Fig. 4, weight loss (a weight loss of approximately 0.3 mg (approximately 10%)) mainly due to the water contained in the sample occurred from the test start temperature, 30°C, to 200°C. Then, weight loss further occurred in the vicinity of 320°C, and the sample burned toward 500°C.

The DTG curve in Fig. 4 has peaks in the vicinity of 220°C, in the vicinity of 250°C, and in the vicinity of 320°C. These peaks are considered to be associated with the weight loss.

The DTA curve in Fig. 4 has been confirmed to have an endothermic peak due to heat of vaporization accompanying volatilization of water up to 200°C. The DTA curve also has an exothermic peak in the vicinity of 310°C. It is inferred that this peak shows exotherm accompanying generation of a pyrolysis gas due to heating. The steep peak rising toward 500°C is considered to be due to burning of the sample that is to carbonize. It can be inferred that the maximum exothermic peak appears and the sample carbonizes in the vicinity of about 500°C.

From the above, it has been confirmed that the powder body manufactured from the carrot lees has a maximum exothermic peak detected with the differential thermal analysis method at at least 400°C or higher, and has high heat resistance.

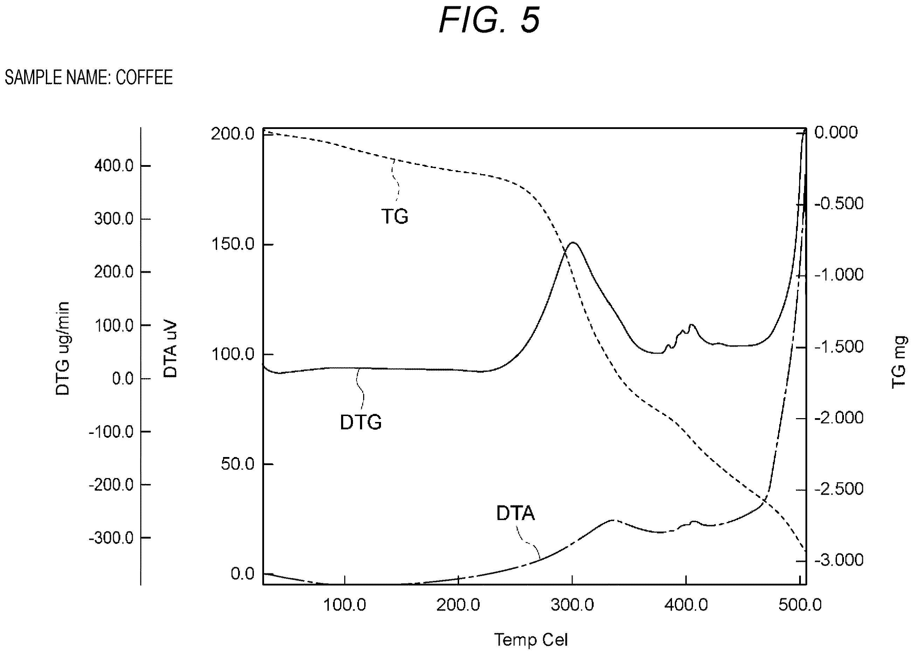

As a result of measuring the powder body manufactured from the coffee grounds, the results shown in Fig. 5 (denoted by "SAMPLE NAME: COFFEE") were obtained. Fig. 5 shows the measurement results of the thermogravimetric analysis, the differential thermogravimetric analysis, and the differential thermal analysis (the TG curve, the DTG curve, and the DTA curve) of the powder body manufactured from the coffee grounds.

From the TG curve in Fig. 5, weight loss (a weight loss of approximately 0.3 mg (approximately 10%)) mainly due to the water contained in the sample occurred from the test start temperature, 30°C, to 250°C. Then, weight loss further occurred in the vicinity of 350°C, and the sample burned toward 500°C.

The DTG curve in Fig. 5 has peaks in the vicinity of 300°C and in the vicinity of 400°C. These peaks are considered to be associated with the weight loss.

The DTA curve in Fig. 5 has been confirmed to have an endothermic peak due to heat of vaporization accompanying volatilization of water up to 200°C. The DTA curve also has an exothermic peak in the vicinity of 340°C. It is inferred that this peak shows exotherm accompanying generation of a pyrolysis gas due to heating. The steep peak rising toward 500°C is considered to be due to burning of the sample that is to carbonize. It can be inferred that the maximum exothermic peak appears and the sample carbonizes in the vicinity of about 510°C.

From the above, it has been confirmed that the powder body manufactured from the coffee grounds has a maximum exothermic peak detected with the differential thermal analysis method at at least 400°C or higher, and has high heat resistance.

Thus, it has been confirmed that the powder bodies manufactured from the apple lees, the carrot lees, and the coffee grounds respectively by processing with the processing apparatus 10 each have a maximum exothermic peak detected with the differential thermal analysis method at 400°C or higher, that is, at a higher temperature than the maximum exothermic peak of powder bodies of the related art, and therefore has wider applications than powder bodies of the related art and can be widely used in various applications.

### Reference Signs List

- 10:: Processing apparatus
- 12:: Processing tank
- 14:: Stirring unit
- 15:: Ion gas supply unit
- 38A:: Negative ion generator (ion generator)
- 61:: Exhaust unit
- 72:: Heater

## Claims

1. A powder body obtained from a water-containing organic matter, the powder body having
a moisture content of 20% or less,
a bacterial count of mesophilic aerobic bacteria of 10⁵/g or less, and
a maximum exothermic peak by a differential thermal analysis method of 300°C or higher.

2. The powder body according to Claim 1 having a maximum exothermic peak by a differential thermal analysis method of 350°C or higher and 700°C or lower.

3. The powder body according to Claim 1 or 2 that is usable as a fertilizer, feed, or a raw material of a molded article.

4. The powder body according to any one of Claims 1 to 3, wherein the water-containing organic matter is any one of vegetable waste, fruit waste, cut grass, an organic residue after beverage extraction, meat waste, fish waste, sewage, and waste foods.

5. The powder body according to Claim 4, wherein the organic residue after beverage extraction is any one of apple lees, tangerine lees, grape lees, grapefruit lees, peach lees, carrot lees, green pepper lees, liquor lees, used green tea leaves, a barley tea residue, and coffee grounds.

6. The powder body according to any one of Claims 1 to 5, wherein the moisture content, the bacterial count of mesophilic aerobic bacteria, and a temperature of the maximum exothermic peak by the differential thermal analysis method are results of measuring the powder body left at room temperature for 1 year after manufacture of the powder body.

7. A method for manufacturing a powder body from a water-containing organic matter, the method comprising:
a storing step of storing the water-containing organic matter in a processing tank; and
a processing step of heating the water-containing organic matter in the processing tank while the water-containing organic matter is stirred, supplying an ion gas having an ion density of 2,000,000 pcs/cc or higher to the processing tank at a rate ranging from 1 m³/min to 300 m³/min by exhausting a gas from the processing tank at a rate ranging from 1 m³/min to 300 m³/min to separate water molecules in the water-containing organic matter and evaporate water contained in the water-containing organic matter.

8. The method according to Claim 7, wherein
a temperature in the processing tank is shifted within a range from 25°C to 70°C during the processing step, and
the processing step is continuously performed for 2 hours or more and 70 hours or less.

9. A powder body manufactured with the method according to Claim 7 or 8.
